(19) Europäisches Patentamt
European Patent Office
Office européen des brevets

(11) Publication number: **0 433 713 A1**

# (12) EUROPEAN PATENT APPLICATION

(21) Application number: **90122622.5**

(22) Date of filing: **27.11.90**

(51) Int. Cl.5: **C08K 5/01**, C08L 69/00, //(C08L69/00,55:02)

The title of the invention has been amended (Guidelines for Examination in the EPO, A-III, 7.3).

(30) Priority: **19.12.89 US 452549**

(43) Date of publication of application: **26.06.91 Bulletin 91/26**

(84) Designated Contracting States: **DE ES FR GB IT NL**

(71) Applicant: **GENERAL ELECTRIC COMPANY**
**1 River Road**
**Schenectady New York 12305(US)**

(72) Inventor: **Nelson, Linda Harmon**
**720 Drexel Drive**
**Evansville, Indiana 47712(US)**

(74) Representative: **Catherine, Alain**
**General Electric France Service de Propriété Industrielle 18 Rue Horace Vernet**
**F-92136 Issy-Les-Moulineaux Cedex(FR)**

## (54) Polycarbonate resin compositions containing mould release agents.

(57) A composition comprising an admixture of (a) an aromatic polycarbonate resin, (b) an impact modifying amount of an ABS or ABS type resin and (c) a mold release effective amount of a fluid hydrogenated oligomer of an alpha-olefin.

EP 0 433 713 A1

# COMPOSITION

## BACKGROUND OF THE INVENTION

Useful articles from various thermoplastic resins have been prepared from molds for many years. Injection molding provides a convenient way for preparing various articles from thermoplastic resins, particularly objects of a relatively intricate nature. In order to injection mold articles in an economic manner, the mold resident cycle time should be kept to a minimum. This shorter cycle time provides a shorter resin heat period with consequently less thermal damage to the resin itself and/or less thermal promoted interaction between the resin and various additives present in the resin. In order to accomplish a release of the resin from the mold, various mold release agents have been found which provide for a release of the resin with lower ejection pressure. Such an agent should be chemically compatible with the resin as measured by the usual characteristics of the resin under normal conditions and heat treatments.

Acrylonitrile-butadiene-styrene resins, usually abbreviated as ABS resins, also have a similar problem. Previously ethylenediamine bisstearamide has been incorporated into ABS resins as a lubricant, see USP 3,947,367. A further additive which has been disclosed as having generally a lubricating action and utilized to help increase the moldability of ABS resin are the esters of monocarboxylic saturated aliphatic acids with polyvalent alcohols of high molecular weight, see USP 4,174,325 wherein pentaerythrityltetrastearate was employed. It also has been known to use, in general, mineral oils for the release of certain thermoplastics such as polycarbonate from molds. Such mineral oils are described in Japanese application numbers K53,22556; K79,16559; K72,41093; K80,84353 and GB patent number 2077742. Mineral oils are naturally occuring complex mixtures of hydrocarbons that are obtained from petroleum Additionally 0.1 to 3.0 weight percent of a mineral oil has been employed to increase the impact strength and improve flowability of an ABS resin, see European Patent Application 177096. These mineral oils are (1) paraffinic in nature with straight or branched chains containing at least 20 carbon atoms, (2) naphthenic or relatively naphthenic - i.e., constituted at least prevailingly by saturated, monocyclic, of from 4 to 12 carbon atoms and polycyclic, of from 13 to 26 carbon atom hydrocarbons, or (3) the aromatic oils having a minimum molecular weight around 300. All these oils show a minimum flash point in closed cup, according to ASTM D 93, of 150° C. However, the resin compositions with the mineral oil are prepared by adding the mineral oil to the actual manufacturing process of the ABS resin. For example the oils are added during the endstage of the grafting reaction or before the coagulation of the latex to the grafted polymer. Therefore the resulting ABS resin composition does not appear to be a mere admixture of the ABS resin and the mineral oil. Rather the oils appear to be at least substantially intermingled during the actual manufacturing process of the ABS resin.

USP 3,759,863, incorporated within, discloses a four component composition of polyvinylchloride, a certain type of ABS, a dialkyltin mercaptide stabilizer and a lubricant which is described as essentially containing hydrocarbons with at least 16 carbon atoms. A mineral oil of hydrocarbons with 20 to 30 carbon atoms, having a boiling range of above 350° c and a refraction index of $n_D^{20}$ = 1.4816 are preferred.

USP 3,403,120 discloses as a lubricant for ABS a paraffinic, naphthenic or aromatic mineral oils preferably having a certain viscosity range. At least 3 wt.% of the lubricant should be used. The additive is added to the coagulum of the latex of the polymeric components, incorporation inside the anhydrous pellets or by admixing into the latex and then coagulating the latex.

In none of these publications is there an indication that the lubricant was functioning as a mold release agent.

Recently synthetic mineral oils derived from the oligomerization of alpha olefins followed by hydrogenation to remove unsaturation has provided surprising benefit in the area of mold release agents for various materials. Miller et al, USP 4,626,566 described and claims aromatic carbonate polymer compositions and admixture with a hydrogenated alpha olefin oligomer fluid. Additionally USP 4,826,913 discloses the use of such oligomer fluids as mold release effective agents for various other polymers including organic polyesters, poly(arylene oxide)s, poly(arylene sulfide)s, poly(etherimide)s and polysulfones. However to this date there has been no known admixture of these synthetic oligomers fluids with an ABS resin.

A known mold release for polycarbonates and ABS resin is an olefin, see USP 4,399,251.

Blends of polycarbonate and ABS or ABS type resins have been known for many years. Mold release is also an issue with respect to these blends. A recent European patent application EP 248308 has disclosed that polycarbonate ABS blends have a different melt behavior compared to pure polycarbonate. It also discloses that such blends can have enhanced mold release with the addition of an ester of saturated aliphatic $C_{10}$-$C_{22}$ carboxylic acids and thihydric alcohol. Pentaerythrityl tetrastearate can also be present.

SUMMARY OF THE INVENTION

In accordance with the invention there is a composition comprising an admixture of (a) an aromatic polycarbonate (b) an impact modifying amount of ABS or ABS type resin and (c) a mold release effective amount of a fluid hydrogenated oligomer of an alpha-olefin.

Another aspect of the invention that the admixture can occur with the already manufactured ABS or ABS type resin.

A further aspect of the invention is the absence or essential absence of polyvinyl chloride and/or a dialkyltin mercaptide stabilizer from the composition.

Preferred as the mold release are the fluid hydrogenated oligomers of the alpha olefin.

DETAILED DESCRIPTION OF THE INVENTION

The aromatic polycarbonates useful in the invention are the usual aromatic polycarbonates well known in the literature for many years. The aromatic polycarbonates are prepared from the reaction of a dihydric phenol and a carbonate precursor. The dihydric phenols useful in preparing the aromatic polycarbonates include those of the formula.

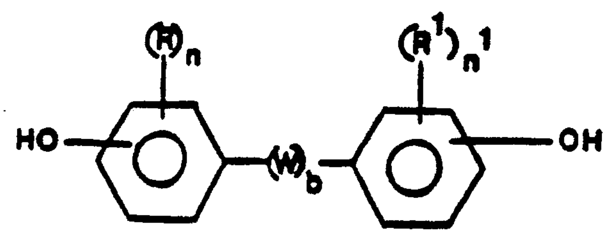

wherein:

R is independently selected from halogen, monovalent hydrocarbon, and monovalent hydrocarbonoxy radicals;

$R^1$ is independently selected from halogen, monovalent hydrocarbon, and monovalent hydrocarbonoxy radicals;

W is selected from divalent hydrocarbon radicals,

-S-, -S-S-, -O-, 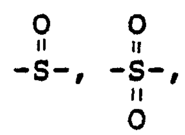 and 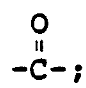;

n and $n^1$ are independently selected from integers having a value of from 0 to 4 inclusive; and

b is either zero or one.

The monovalent hydrocarbon radicals represented by R and $R^1$ include the alkyl, cycloalkyl, aryl, aralkyl and alkaryl radicals. The preferred alkyl radicals are those containing from 1 to about 12 carbon atoms. The preferred cycloalkyl radicals are those containing from 4 to about 8 ring carbon atoms. The preferred aryl radicals are those containing from 6 to 12 ring carbon atoms, i.e., phenyl, naphthyl, and biphenyl. The preferred alkaryl and aralkyl radicals are those containing from 7 to about 14 carbon atoms.

The preferred halogen radicals represented by R and $R^1$ are chlorine and bromine.

The divalent hydrocarbon radicals represented by W include the alkylene, alkylidene, cycloalkylene and cycloalkylidene radicals. The preferred alkylene radicals are those containing from 2 to about 30 carbon atoms. The preferred alkylidene radicals are those containing from 1 to about 30 carbon atoms. The preferred cycloalkylene and cycloalkylidene radicals are those containing from 6 to about 16 ring carbon atoms.

The monovalent hydrocarbonoxy radicals represented by R and $R^1$ may be represented by the formula - $OR^2$ wherein $R^2$ is a monovalent hydrocarbon radical of the type described hereinafore. Preferred monovalent hydrocarbonoxy radicals are the alkoxy and aryloxy radicals.

Some illustrative non-limiting examples of the dihydric phenols falling within the scope of Formula II include:

2,2-bis(4-hydroxyphenyl) propane (bisphenol-A);
2,2-bis(3,5-dibromo-4-hydroxyphenyl)propane;
2,2-bis(3,5-dimethyl-4-hydroxyphenyl)propane;
1,1-bis(4-hydroxyphenyl)cyclohexane;
1,1-bis(3,5-dimethyl-4-hydroxyphenyl)cyclohexane;
1,1-bis(4-hydroxyphenyl)decane;
1,4-bis(4-hydroxyphenyl)propane;
1,1-bis(4-hydroxyphenyl)cyclododecane;
1,1-bis(3,5-dimethyl-4-hydroxyphenyl)cyclododecane;
4,4 -dihydroxydiphenyl ether;
4,4 -thiodiphenol;
4,4 -dihydroxy-3,3 -dichlorodiphenyl ether; and
4,4 -dihydroxy-2,5-dihydroxydiphenyl ether.

Other useful dihydric phenols which are also suitable for use in the preparation of the above polycarbonates are disclosed in U.S. Patent Nos. 2,999,835; 3,028,365; 3,334,154; and 4,131,575, all of which are incorporated herein by reference.

The carbonate precursor utilized in the invention can be any of the standard carbonate precursors such as phosgene, diphenyl carbonate and the like. When using an interfacial process or a bischlorolformate process it is also preferred to use a standard catalyst system well known in the synthesis of polycarbonates and copolyestercarbonates. A typical catalyst system is that of an amine system such as tertiaryamine, amidine or guanidine. Tertiaryamines are generally employed in such reactions. Trialkylamines such as triethylamine are generally preferred.

The ABS composition or ABS type composition which is employed in this invention is the usual standard ABS compositions known throughout the industry. An ABS or ABS type composition comprises from (a) about 10 to 90 weight percent of a mixture of acrylonitrile and styrene or alpha-methyl styrene wherein the acrylonitrile is from about 10 to 50 weight percent of the reactant mixture and the styrene and/or alpha-methyl styrene is from about 50 to 90 weight percent of the reactant mixture and (b) about 90 to 10 weight percent of polybutadiene or polyisoprene, preferrably polybutadiene. Up to about 50 wt.% of the polybutdiene or polyisoprene can be replaced by the styrenic material. Of course, copolymers of acrylonitrile and styrene and/or alpha-methyl styrene are also present in the ABS type material. Additionally wherein acrylonitrile is used either some or all of the acrylonitrile can be replaced with methylmethacrylate. The preferred resins are acrylonitrile butadiene styrene (ABS) or methylmethacrylate butadiene styrene (MBS). With respect to MBS a preferred configuration is coreshell. These resins may be made by any of the well known methods including suspension polymerization, bulk polymerization, or bulk suspension polymerization or other procedures which are known to prepare core shell polymers.

The hydrogenated alpha-olefin oligomer fluids useful in this invention are derived from the oligomerization of alpha olefins through a catalytic reaction followed by optional hydrogenation to remove residual unsaturation. Examples of such catalysis include: cationic catalysis, see J.A. Breenan, Ind. Eng. Chem. Prod. Res. Div. (1980) 19,2; Ziegler catalysis, see D.H. Antonsen et al, Ind. Eng. Res. Div., (1983), 22, 178 and references therein. Methods of preparation are also disclosed in U.S. Pat. Nos. 4,282,392; 4,225,739; 4,319,065; 4,311,864; 4,334,113 and 4,409,415 and references therein.

The product of oligomerization/hydrogenation is a mineral oil with fluidity over a wide temperature range. The product generally is a mixture of oligomers of various degrees of polymerization, branching and isomerization depending on the nature of the catalyst and olefin used and any subsequent product fractionation such as by distillation. A product structure representative of this type of oligomerization is 9-methyl-11-n-octyl heneicosane. Normal alpha olefins of 6-12 carbon atoms are preferred for the preparation of synthetic fluids, with 1-decene being most common. The oligomers are generally separated into various mixtures of dimer, trimer, tetramer and pentamer to achieve varying degrees of volatility, viscosity and viscosity index. The preferred alpha-olefin oligomer fluids for this invention are those with a kinematic viscosity of approximately 2-10 cSt at 100 °C as determined by ASTM D445. Such oligomer fluids are commercially available from Emery Industries, and are known as Emery 3002, Emery 3004, Emery 3006 and Emery 3010. The approximate composition of these fluids, as determined by gas chromatography, is shown below.

| | DIMER | TRIMER | TETRAMER | PENTAMER | AVG. # CARBONS |
|---|---|---|---|---|---|
| 3002 | 100% | --- | --- | --- | 20 |
| 3004 | -- | 89 | 11 | --- | 31 |
| 3006 | -- | 29 | 62 | 9 | 38 |

Alternatively, the Synfluids manufactured by Gulf Oil Corporation also may be used.

The quantity of ABS or ABS type resin which can be present in the admixtures is any quantity which impact modifies the polycarbonate. Generally a minimum of about 3 wt.%, preferably 4 wt.% will impact modify the polycarbonate. Wt. percent ABS or ABS type resin is measured as percent of polycarbonate and ABS or ABS type resin. Up to about 95 wt.% ABS or ABS type resin can be employed. Generally, quantities of ABS or ABS type resin of from about 5 to 75 wt. %, more preferably about 7 to about 60 wt.% are employed. Also particularly useful are quantities of ABS or ABS type resin of from about 7 to 20 wt.%.

An effective mold releasing amount of the oligomeric material of the invention is employed in the thermoplastic composition. An amount of material which reduces the amount of pressure needed to eject the article from the injection mold and obtain a substantially unblemished article in comparison to the pressure needed to eject the thermoplastic composition control is an effective mold releasing amount. In general effective amounts of the material are from about 0.25 to about 5.0 weight percent based on the quantity of ABS or ABS type resin present, preferably from about 0.5 to about 3.0 weight percent. A more preferred range is about 1.0 to about 2.5 weight percent.

The materials are preferably added to the resin after the ABS resin has been manufactured. That is, it should be added in the normal manner that the usual additives are added, for example blended with the previously manufactured ABS or ABS type resin in a Banbury mixer or actually added during the extrusion process wherein the ABS or ABS type resin is being pelletized or together with the polycarbonate and ABS or ABS type resin.

Although it is preferred to add the oligomer fluid during the dry mixing of the finished ABS or ABS type resin, it can also be added during the manufacturing process as, for example during the endstage of the grafting reaction, before the coagulation of the latex to the grafted polymer or together with the extrusion of the polycarbonate and ABS or ABS type resin. Below are examples of the invention. These examples are intended to illustrate and exemplify rather than narrow the inventive concept.

Example 1

4.5 wt.% Blendex 360, an ABS resin with 12.5 wt.% acrylonitrile, 50 wt.% butadiene and 37.5 wt.% styrene, was blended with 95.5 wt.% bisphenol-A polycarbonate of intrinsic viscosity of 0.46-0.49 measured in methylene chloride at 25 °C. Also blended together with the ABS and polycarbonate was 0.2 wt.% thioester, 0.1 wt.% of a hindered phenol and 0.1 wt.% of a phosphite. This was identified as control in the Table below. The Blendex 101 and polycarbonate are available from GE Plastics. To a sample of the same control blend was added alpha-olefin oligomer fluid identified as Emery 3004, available from Emery Chemical Company. The blending of the Emery 3004 occurred after the manufacturing of the Blendex 101 and was done in the extruder.

Mold release effectiveness was determined in an injection molding machine with a 4 ounce shot capacity. The part molded was a 3" by 3" center-gated box tool with a 1 1/2" wall height and 1/8" thick walls. It had ejector pins at four corners with two of the pins being attached to strain gauge transducers for measuring the part ejection pressure. The mold was designed with very little draft so that the part would tend to stick to the core unless a mold release agent was used.

Below are the results:

TABLE I

| | Control 1 | Example 1 |
|---|---|---|
| Mold Release agent | 0.0 | 1wt.% Emery 3004 |
| Release Pressure psi | 3990±74[a] | 2308±90[b] |

a. average of ten runs

b. average of twelve runs

As is readily observed from the data in the table, the use of the Emery 3004 hydrogenated oligomer fluid substantially reduced the release pressure for the ejected particle.

EXAMPLE 2

In order to be an effective mold release agent, the mold release material should be compatible with the resin, that is, there should be very little if any degradation of the resin and the usual physical properties of the resin should be significantly unchanged.

To the control blend in Example 1 was added 1 wt.% Emery 3004 or 1 wt.% pentaerthryritoltetrastearate (PETS). The Notched Izod, ASTMD256 was measured at various temperatures. Below are the results:

TABLE II

| | | Control | Mold Release | |
|---|---|---|---|---|
| | | | PETS | Emery 3004 |
| N.I. ft.lbs/in °C | -30 | 12.6 | 12.6 | 12.1 |
| | -42 | 10.5 | 11.1 | 9.3 |

The above results of Table II demonstrate that the hydrogenated alpha-olefin oligomer fluid is compatible with the blend as measured by Notched Izod impact strength and comparable with the known mold release agent PETS.

## Claims

1. A composition comprising an admixture of (a) an aromatic polycarbonate resin, (b) an impact modifying amount of an ABS or ABS type resin and (c) a mold release effective amount of a fluid hydrogenated oligomer of an alpha-olefin.

2. The composition in accordance with claim 1 wherein the mixing of the alpha olefin oligomer occurs with the already manufactured ABS or ABS type resin.

3. The composition in accordance with claim 1 wherein polyvinylchloride is essentially absent from the composition.

4. The composition in accordance with claim 1 wherein the resin is ABS.

5. The composition in accordance with claim 1 wherein the resin is MBS.

6. The composition in accordance with claim 1 wherein dialkyltin mercaptide is essentially absent from the composition.

7. The composition in accordance with claim 1 wherein the hydrogenated oligomer of an alpha olefin is present in amounts of from about 0.25 to about 5.0 weight percent of the resin.

8. The composition in accordance with claim 1 wherein the mixing of the alpha olefin oligomer occurs with the already manufactured ABS or ABS type resin and the fluid is non hydrogenated.

9. The composition in accordance with claim 1 wherein polyvinylchloride is essentially absent from the composition.

10. The composition in accordance with claim 1 wherein the polycarbonate is bisphenol-A polycarbonate.

11. The composition in accordance with claim 4 wherein the polycarbonate is bisphenol-A polycarbonate.

12. The composition in accordance with claim 5 wherein the polycarbonate is bisphenol-A polycarbonate.

13. The composition in accordance with claim 7 wherein the polycarbonate is bisphenol-A polycarbonate.

European Patent Office

# EUROPEAN SEARCH REPORT

Application Number

**EP 90 12 2622**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | US-A-4 626 566 (K. MILLER ET AL.)<br>* column 2, lines 58 - 59; claims *<br>- - - | 1-13 | C 08 K 5/01<br>C 08 L 69/00 //<br>(C 08 L 69/00<br>C 08 L<br>C 08 L 55:02 ) |
| Y | EP-A-0 023 291 (BAYER AG)<br>* page 15, lines 1 - 6; claim 1 *<br>- - - - - | 1-13 | |
| | | | TECHNICAL FIELDS SEARCHED (Int. Cl.5) |
| | | | C 08 K<br>C 08 L |

The present search report has been drawn up for all claims

| Place of search | Date of completion of search | Examiner |
|---|---|---|
| The Hague | 15 March 91 | HOFFMANN K.W. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document